# EUROPÄISCHE PATENTANMELDUNG

(11) **EP 4 699 966 A1**
(43) Veröffentlichungstag der Anmeldung: **25.02.2026**
(21) Anmeldenummer: 25191460.2
(22) Anmeldetag: 24.07.2025
(51) Int. Cl.: B65G 57/24, B65G 61/00

(54) **PALETTIERKOPF UND VERFAHREN ZUM PALETTIEREN VON STÜCKGUTLAGEN MITTELS EINES PALETTIERKOPFS**

(30) Priorität: 20.08.2024 DE 102024123731
(71) Anmelder: Krones Aktiengesellschaft, 93073 Neutraubling (DE)
(72) Erfinder: BEER, Erhard, 93073 Neutraubling (DE); KOLLMUSS, Manuel, 93073 Neutraubling (DE); MEHDI, Arsalan, 93073 Neutraubling (DE); MURNAUER, Dominik, 93073 Neutraubling (DE); OSTERHAMMER, Martin, 93073 Neutraubling (DE); SCHWEIGHOFER, Georg, 93073 Neutraubling (DE)
(74) Vertreter: Benninger, Johannes

(57) **Zusammenfassung**

Es werden ein Palettierkopf (1) und ein Verfahren zum Palettieren von Stückgutlagen mittels eines Palettierkopfs (1)offenbart. Der Palettierkopf (1) weist eine Auflageebene (2) für jeweils eine aufzunehmende und von einem Übernahmeplatz zu einem Zielort zu überführende Stückgutlage auf, welche Auflageebene (2) am Zielort unter der Stückgutlage entfernbar ist. Eine Ablagerichtung (A) der Stückgutlage bei ihrer Ablage am Zielort ist in etwa senkrecht orientiert zu einer Beladerichtung (B) am Übernahmeplatz. Die Stückgutlage ist bei ihrer Aufnahme am Übernahmeplatz sowie bei ihrer Ablage am Zielort jeweils in Abstimmung mit einer Positionierbewegung des Palettierkopfes (1) zwischen dem Übernahmeplatz und dem Zielort innerhalb des Palettierkopfes (1) stabilisierbar und positionierbar.

Das Verfahren sieht vor, dass die Stückgutlagen an einem Übernahmeplatz aufgenommen und auf eine Auflageebene (2) des Palettierkopfes (1) übergeschoben werden, um mittels des Palettierkopfes (1) an einem Zielort abgelegt zu werden, indem die Auflageebene (2) unter der im Palettierkopf (1) befindlichen Stückgutlage am Zielort entfernt wird. Eine Ablagerichtung (A) der Stückgutlage bei ihrer Ablage am Zielort ist in etwa senkrecht orientiert zu einer Beladerichtung (B) der Stückgutlage am Übernahmeplatz. Die Stückgutlage wird in einer ersten Position innerhalb des Palettierkopfes (1) und relativ zu diesem positioniert, wonach die Stückgutlage bei der Überführung des Palettierkopfes (1) zum Zielort auf der Auflageebene (2) in Beladerichtung (B) weiterbewegt wird, bevor die Auflageebene (2) beim Erreichen des Zielortes unterhalb der abzulegenden Stückgutlage entfernt wird.

## Beschreibung

Die vorliegende Erfindung betrifft einen Palettierkopf mit einer Auflageebene für jeweils eine aufzunehmende und von einem Übernahmeplatz zu einem Zielort zu überführende Stückgutlage sowie ein Verfahren zum Palettieren von Stückgutlagen mittels eines solchen Palettierkopfs. Insbesondere betrifft die Erfindung eine Lagenpositionierung mit Gegenhalter.

Bei einem automatisierten Umgang mit Stückgütern, die beispielsweise durch einzelne Gegenstände, Gebinde aus mehreren Gegenständen, Gruppen von mehreren Gegenständen oder Kombinationen hiervon gebildet sein können, wird generell ein hoher Stückgüterdurchsatz angestrebt. Dieser Durchsatz an Stückgütern lässt sich durch die Taktung beschreiben, mit der innerhalb möglichst kurzer Zeit mit möglichst vielen Stückgütern umgegangen werden kann. Je kürzer die Taktung, desto höher ist dabei der Stückgüterdurchsatz, und umso höher und damit besser ist die Auslastung der hierfür vorgesehenen Maschinen, Anlagen und Einrichtungen.

Die Taktung kann anschaulich durch ihren Kehrwert als der Quotient der Anzahl von Stückgütern zur Zeit, innerhalb der mit dieser Anzahl von Stückgütern umgegangen wird, beschrieben werden. Der Kehrwert der Taktung kann auch als Durchsatz bezeichnet werden. Oft werden die Bezeichnungen Durchsatz und Taktung gleichermaßen verwendet, beispielsweise wenn von einer möglichst hohen Taktung die Rede ist.

Der automatisierte Umgang mit Stückgütern umfasst meist eine speditionsgerechte Palettierung. Die Palettierung erfolgt durch Bildung von Stückgutlagen eine nach der anderen und deren anschließendem übereinander Aufstapeln auf Paletten. Bei den Stückgutlagen handelt es sich dabei üblicherweise um so genannte palettierfähige Lagen aus jeweils mehreren, entsprechend den Abmessungen einer Palette geeignet angeordneten Stückgütern, wie beispielsweise Getränkegebinden. Das Aufstapeln erfolgt durch Ablegen einer Stückgutlage nach der anderen auf der Palette zu einem Stapel, bis eine vorgegebene Anzahl von Stückgutlagen erreicht ist. Die dann volle Palette wird anschließend abtransportiert und durch eine leere Palette ersetzt, auf der das Aufstapeln wieder erneut von vorn beginnt.

Eine solche Palettierung erfolgt zwangsläufig chargenweise unter Bildung und Ablage der Stückgutlagen eine nach der anderen durch zwei verschiedene Anlagenteile. Die Bildung der Stückgutlagen erfolgt typischerweise durch eine auch als Gruppierstation bezeichnete, so genannte Lagenbildungseinrichtung, beispielsweise am Ende einer Abfüll- und/oder Verpackungsanlage. Das Palettieren unter Ablegen der Stückgutlagen an einem auch als Beladeplatz bezeichneten Stapelplatz, kurz: Zielort, erfolgt durch eine auch als Beladeeinheit bezeichnete, so genannte Palettierstation. Deren wesentlicher, das Aufnehmen der gebildeten Stückgutlage und deren Ablegen am Stapelplatz besorgender Bestandteil ist ein Palettierkopf.

Zum Aufnehmen einer Stückgutlage wird diese von der Gruppierstation in den Palettierkopf übergeschoben. Dabei wird die Stückgutlage in einer Abgabe- oder Absetzposition auf einer Auflageebene im Palettierkopf positioniert. Der Palettierkopf befindet sich währenddessen an einem Übernahmeplatz. Anschließend setzt der Palettierkopf die Stapellage zum Stapelplatz über. Eine Bewegung des Palettierkopfs in so genannter X- oder Y-Richtung längs oder quer in Relation zum Überschieben der Stückgutlage am Übernahmeplatz ist dabei erst möglich, wenn die Stückgutlage in Abgabeposition steht, da sich das Lagebild sonst verschieben kann. Am Zielort angekommen wird die Auflageebene zum Zwecke der Ablage der im Palettierkopf befindlichen Stückgutlage unter der sich in der Abgabeposition befindlichen Stückgutlage entfernt.

Die Stückgutlage kann beispielsweise mittels eines Schiebers in eine Abgabe- oder Absetzposition auf einer Auflageebene im Palettierkopf positioniert werden.

Der Schieber kann einen Schubbalken umfassen, der die Stückgutlage überschiebt und im Palettierkopf positioniert.

Der Einsatz eines solchen Schubbalkens verlangt allerdings eine reduzierte Geschwindigkeit beim Überschieben der Stückgutlagen von der Gruppierstation in den Palettierkopf, da die Stückgutlage ansonsten aufgrund ihrer Massenträgheit Gefahr laufen, unpräzise im Palettierkopf positioniert zu werden oder in ungünstigen Fällen sogar über die Abgabeposition hinauszuschießen.

Durch EP 2 610 197 B1 ist bekannt, das Überschieben antriebslos zu besorgen. Die von einem die Stückgutlagen zum Übernahmeplatz transportierenden Förderer vermittelte kinetische Energie wird genutzt, damit die Stückgutlage durch ihre Massenträgheit die Abgabeposition auf einer durch frei drehbare Rollen gebildeten Auflageebene unter Anprall an eine Stopperleiste erreicht. Auch hierbei wird jedoch das grundsätzliche Erfordernis der reduzierten Überschubgeschwindigkeit der Stückgutlagen von der Gruppierstation in den Palettierkopf nicht beseitigt, denn bei einem schnelleren Überschieben besteht die Gefahr, dass eine transferierte Stückgutlage beim plötzlichen Anprall gegen die Stopperleiste aus hoher Geschwindigkeit instabil wird und einzelne Stückgüter drohen umzustürzen.

Durch EP 2 639 165 B2 und EP 2 825 488 B1 ist bekannt, dass der Schieber nicht nur einen das Überschieben besorgenden Schubbalken, sondern zusätzlich einen gemeinsam mit diesem bewegten, während des Überschiebens der Stückgutlage in geringem Abstand vorauseilenden Anlagebalken umfasst. Die Verwendung eines solchen Anlagebalkens bedingt jedoch unvermeidliche Zeitverluste beim Übersetzen, da erst auf die vollständige Positionierung der Stückgutlage im Palettierkopf gewartet werden muss, bevor der Anlagebalken bewegt werden kann. Ferner wird eine hohe Antriebsleistung des Schiebers zur Positionierung der Stückgutlage benötigt, um die Zeitverluste überschaubar zu halten.

Um einen hohen Stückgüterdurchsatz zu erreichen, stehen nur sehr kurze Zeiträume zur Verfügung, die Stückgutlagen zu bilden, vom Palettierkopf aufzunehmen und abzulegen. Dies erfordert hohe Geschwindigkeiten der dazwischen liegenden Bewegungen, die zudem mit hohen Beschleunigungen und hierfür notwendigen großen Antriebsleistungen sowohl des Palettierkopfs als auch des Schiebers zum Überschieben einhergehen. Infolgedessen tritt ein erhöhter Verschleiß der entsprechenden Komponenten des Palettierkopfs und des Schiebers auf.

Eine Aufgabe der Erfindung kann darin gesehen werden, einen Palettierkopf und ein Verfahren zum Palettieren von Stückgutlagen mittels eines solchen Palettierkopfs zu schaffen, welche einen hohen Stückgüterdurchsatz aufweisen, bevorzugt bei gleichzeitig verringertem spezifischem Verschleiß, entsprechend dem tatsächlich auftretenden Verschleiß in Relation zum Stückgüterdurchsatz.

Die obige Aufgabe wird durch einen Palettierkopf und ein Verfahren zum Palettieren von Stückgutlagen mittels eines solchen Palettierkopfs gelöst, welche jeweils die Merkmale des unabhängigen Vorrichtungs- beziehungsweise Verfahrensanspruchs umfassen. Weitere vorteilhafte Ausgestaltungen werden durch die jeweiligen abhängigen Ansprüche beschrieben.

Ein erster Gegenstand der Erfindung betrifft demnach einen Palettierkopf, welcher eine Auflageebene für jeweils eine aufzunehmende und von einem Übernahmeplatz zu einem Zielort zu überführende Stückgutlage aufweist. Die Auflageebene ist zum Zwecke der Ablage der im Palettierkopf befindlichen Stückgutlage am Zielort unter der Stückgutlage entfernbar. Der Palettierkopf ist zwischen dem Übernahmeplatz und dem Zielort bewegbar.

Eine Ablagerichtung der Stückgutlage bei ihrer Ablage am Zielort kann in etwa senkrecht orientiert sein zu einer Beladerichtung der Stückgutlage am Übernahmeplatz.

Der Palettierkopf zeichnet sich dadurch aus, dass die Stückgutlage bei ihrer Aufnahme am Übernahmeplatz sowie bei ihrer Ablage am Zielort jeweils in Abstimmung mit einer Positionierbewegung des Palettierkopfes zwischen dem Übernahmeplatz und dem Zielort innerhalb des Palettierkopfes stabilisierbar und positionierbar ist.

Ein zweiter Gegenstand der Erfindung betrifft ein Verfahren zum Palettieren von Stückgutlagen mittels eines Palettierkopfs. Bei dem Verfahren werden die Stückgutlagen an einem Übernahmeplatz aufgenommen und auf eine Auflageebene des Palettierkopfs übergeschoben, um mittels des Palettierkopfs an einem Zielort abgelegt zu werden. Das Ablegen erfolgt, indem die Auflageebene unter der im Palettierkopf befindlichen Stückgutlage am Zielort entfernt wird.

Vorteilhaft ist eine Ablagerichtung der Stückgutlage bei ihrer Ablage am Zielort in etwa senkrecht orientiert zu einer Beladerichtung der Stückgutlage am Übernahmeplatz.

Das Verfahren sieht vor, dass die Stückgutlage beispielsweise mit dem Überschieben beziehungsweise beim Überschieben in einer ersten Position innerhalb des Palettierkopfes und relativ zu diesem positioniert wird. Danach wird die Stückgutlage bei der Überführung des Palettierkopfs zum Zielort auf der Auflageebene in Beladerichtung weiterbewegt, bevor die Auflageebene beim Erreichen des Zielortes unterhalb der abzulegenden Stückgutlage entfernt wird.

Das Weiterbewegen der Stückgutlage in Beladerichtung bezieht sich vorteilhaft auf die Bewegungsrichtung der Stückgutlage im Palettierkopf. Das Weiterbewegen erfolgt während des Überführens des Palettierkopfs zum Zielort, beispielsweise zu Beginn und/oder am Ende des Überführens. Besonders bevorzugt erfolgt das Weiterbewegen unter Ausnutzung der Massenträgheit der Stückgutlage während des Beschleunigens und/oder Abbremsens des Palettierkopfs bei der Überführung.

Vorteile ergeben sich beispielsweise, indem der Palettierkopf mit seiner kurz als Transferbewegung bezeichneten Bewegung vom Übernahmeplatz bis zum Zielort nicht warten muss, bis die Stückgutlage beim Überschieben ihre Abgabeposition einnimmt. Durch die Stabilisierbarkeit und Positionierbarkeit innerhalb des Palettierkopfs kann die Transferbewegung aufgenommen werden, sobald sich die Stückgutlage auf der Auflageebene befindet. Die Stabilisierung und Positionierung der Stückgutlage im Palettierkopf erfolgt bevorzugt unabhängig vom Überschieben.

Besonders bevorzugt erfolgt die Stabilisierung und Positionierung der Stückgutlage im Palettierkopf während dessen Transferbewegung.

Eine besonders vorteilhafte Ausgestaltung der Erfindung sieht eine Positionierung im Palettierkopf während dessen Transferbewegung vor, wobei die Massenträgheit der Stückgutlage während des Beschleunigens und Abbremsens des Palettierkopfs zur Positionierung im Palettierkopf genutzt wird.

Vorteile ergeben sich unter anderem durch eine Erhöhung des Durchsatzes unter gleichzeitiger Verringerung des Verschleißes der zur Palettierung von Stückgutlagen sowie allgemein der zum automatisierten Umgang vorgesehenen Antriebe durch eine Verringerung von Wartezeiten zwischen den aufeinander abgestimmten Bewegungen sowohl beim Palettieren, als auch von hieraus resultierenden Diskontinuitäten im der Palettierung stromaufwärts vorgelagerten Strom von Stückgütern. Solche Wartezeiten und mit diesen auftretende Diskontinuitäten gehen mit Abstoppverzögerungen und Bewegungswiederaufnahmebeschleunigungen einher. Eine Verflüssigung des Umgangs bei der kurz auch als Lagenbildung bezeichneten Bildung von Stückgutlagen und dem Palettieren, insbesondere durch eine Verkürzung der gegenseitigen Wartezeiten beim Palettieren hilft, Diskontinuitäten im Stückgut-Zustrom stromaufwärts der Gruppierstation zu vermeiden.

Wenn im vorliegenden Zusammenhang von einem Palettierkopf gesprochen wird, so kann dieser als Verbindungsmodul im Förderprozess von einer Stückgutförderung oder von einer Vorgruppierung der heranbeförderten Stückgüter zu einem Ablageplatz, gebildet in der Regel durch eine Palettenlage o. dgl., betrachtet werden. Ein solcher Palettierkopf kann insbesondere in hängender Anordnung an einer höhenverstellbaren Aufhängung gehalten sein, bspw. an einer stabilen Hubsäule. Allerdings sind auch andere Aufhängungen gebräuchlich, bspw. eine Aufhängung eines solchen Palettierkopfes an einem beweglichen Arm eines Mehrachsroboters, so dass mehrachsige Bewegungen im sog. Arbeitsraum des Palettierkopfes möglich sind.

Solche Palettierköpfe werden insbesondere im Zusammenhang von komplexeren Verpackungsmaschinen eingesetzt, wobei diesen Verpackungsmaschinen bspw. eine Füllmaschine zum Befüllen von Getränkebehältern mit einer Flüssigkeit, insbesondere mit einem flüssigen Getränk, vorgeordnet sein kann. Die Getränkebehälter werden normalerweise zu mehreren in Gebinden, den hier so bezeichneten Stückgütern, zusammengefasst, die dann wiederum gruppiert und palettiert werden können, wobei der erfindungsgemäße Palettierkopf zum Einsatz kommen kann. Damit soll an dieser Stelle klargestellt sein, dass eine solche optionale Fülllmaschine stromaufwärts zu der Verpackungsmaschine mit dem Palettierkopf angeordnet sein kann.

Bei den Stückgütern oder Gebinde können die zusammengefassten Bestandteile, d.h. bspw. die Getränkebehälter, mit geeignetem Verpackungsmaterial ausgestattet sein, etwa indem thermoplastisches Verpackungsmaterial auf die Getränkebehälter oder auf Behältergruppen aufgebracht werden kann. Sofern es sich bei einem solchen thermoplastischen Verpackungsmaterial um schrumpfbares Folienmaterial handelt, das unter Wärmeeinwirkung zum Schrumpfen neigt, kann es insbesondere sinnvoll sein, einer für das Applizieren des Folienmaterials erforderlichen Arbeitsstation stromabwärts einen Schrumpftunnel folgen zu lassen. Somit kann bei solchen Ausführungsformen die Verpackungsmaschine einen Schrumpftunnel zum Aufschrumpfen des auf die Getränkebehälter bzw. auf die Behältergruppen aufgebrachten thermoplastischen Verpackungsmaterials mittels Wärmeeinwirkung umfassen.

Alternativ oder ergänzend hierzu kann es außerdem sein, dass die Verpackungsmaschine ein Modul zum Aufbringen von Klebeverbindungen auf Getränkebehälter bzw. auf Behältergruppen umfasst, über welche Klebeverbindungen mehrere Getränkebehälter bzw. mehrere Behältergruppen als Gebinde oder hier so bezeichnete Stückgüter aneinander festgesetzt werden können. Weitere sinnvolle Arbeitsstationen oder Module, die alternativ oder zusätzlich einsetzbar sind, können beispielsweise durch Applikationsstationen zum Anbringen von Verpackungszuschnitten und/oder von Umreifungsbändern oder Umreifungsbanderolen an vorbereitete Behältergruppen gebildet sein, die auf diese Weise zu Gebinden, Verpackungseinheiten oder zu hier so bezeichneten Stückgütern weiterverarbeitet werden können. Die genannten Verpackungsvarianten sind nicht einschränkend oder abschließend zu verstehen, so dass wahlweise auch Stretchwickler oder andere Verpackungsmodule eingesetzt werden können.

Normalerweise ist vorgesehen, dass die Verpackungsmaschine eine dem mindestens einen zum Aufbringen von Verpackungsmaterial auf Getränkebehälter ausgebildeten Industrieroboter nachgeordnete Gruppierstation umfasst, über die mehrere Getränkebehälter, mehrere Behältergruppen oder mehrere Gebinde bzw. Stückgüter in eine relative Anordnung zueinander überführbar sind, welche relative Anordnung auf eine aus den mehreren Getränkebehältern, den mehreren Behältergruppen oder den mehreren Gebinden bzw. Stückgütern zu bildende palettierfähige Lage abgestimmt ist. Eine solche Gruppierstation kann beispielsweise mindestens einen Portalroboter, mindestens einen Deltakinematik-Roboter oder einen anders gearteten Industrieroboter umfassen, der die Getränkebehälter, die Behältergruppen oder die mehreren Gebinde bzw. Stückgüter in die relative Anordnung überführt, die auf eine aus den mehreren Getränkebehältern, den mehreren Behältergruppen oder den mehreren Gebinden bzw. Stückgütern zu bildende palettierfähige Lage abgestimmt ist.

Wie oben schon erwähnt, kann es zudem sinnvoll sein, dass die Verpackungsmaschine eine Arbeitsvorrichtung umfasst, welche die Getränkebehälter, die Behältergruppen oder die Gebinde bzw. Stückgüter der bereits gebildeten relativen Anordnung zusammenschiebt und hierdurch eine vollständige palettierfähige Lage ausbildet.

Zudem umfasst die solchermaßen geartete Verpackungsmaschine die schon erwähnte Palettierstation, die zum gestapelten Verbringen palettierfähiger Lagen an eine zugeordnete Palette ausgebildet ist. Bei solchen Ausführungsformen kann eine Zuführeinrichtung vorgesehen sein, welche der Palettierstation teil- oder vollautonom Paletten zum gestapelten Anordnen mehrere palettierfähiger Lagen bereitstellt. Zwischen der Gruppierstation und der Palettierstation bzw. in deren Förderzusammenhang befindet sich der erfindungsgemäße Palettierkopf.

Im Folgenden soll ein Ausführungsbeispiel die Erfindung und ihre Vorteile anhand der beigefügten einzigen Figur näher erläutern. Die Größenverhältnisse der einzelnen Elemente zueinander in der Figur entsprechen nicht immer den realen Größenverhältnissen, da einige Formen vereinfacht und andere Formen zur besseren Veranschaulichung vergrößert im Verhältnis zu anderen Elementen dargestellt sind.

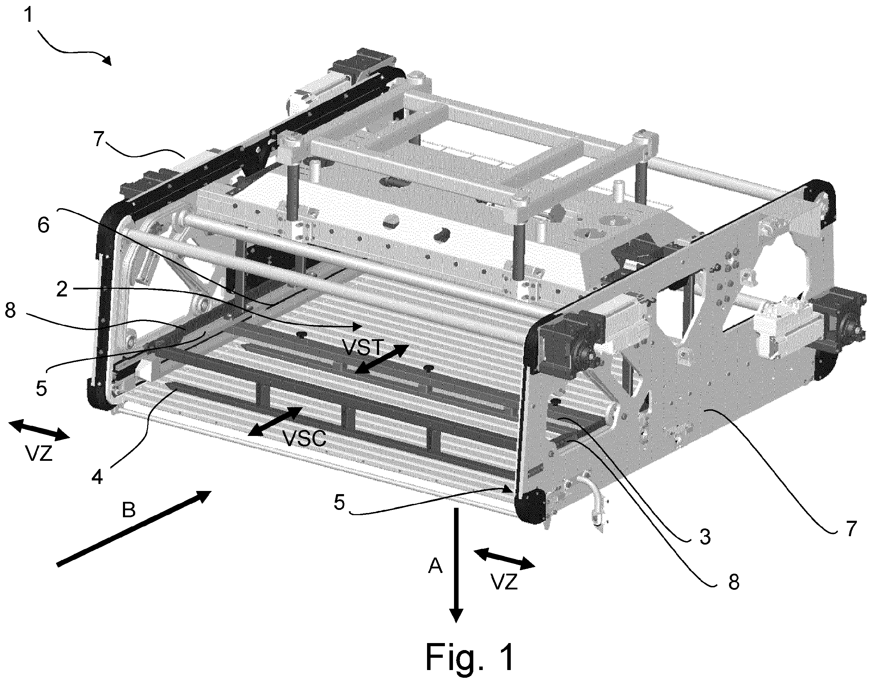

Die einzige Fig. 1 zeigt in schematischer Darstellung einen Palettierkopf in perspektivischer Ansicht, der eine Auflageebene für jeweils eine aufzunehmende und von einem Übernahmeplatz zu einem Zielort zu überführende Stückgutlage aufweist, welche Auflageebene zum Zwecke der Ablage der im Palettierkopf befindlichen Stückgutlage am Zielort unter der Stückgutlage entfernbar ist. Der Palettierkopf kann eine auch als Schubbalken bezeichnete hintere Schubleiste und eine vordere Stützleiste aufweisen, die beide, vorteilhaft in gegenseitiger Abstimmung und/oder Kopplung, motorisch angetrieben beziehungsweise antreibbar sind.

Vorteilhaft kann der Palettierkopf zusätzlich seitliche Zentrierleisten aufweisen, die bevorzugt motorisch angetrieben gegeneinander zustellbar sind. Führungsschlitzartige Ausnehmungen in den Zentrierleisten können vorgesehen sein, um die Bewegung der in derselben Ebene wie die Zentrierleisten angeordneten Stütz- und Schubleisten zu erlauben. Alternativ können die gegenüberliegend angeordneten Zentrierleisten und die ebenfalls gegenüberliegend angeordnete Stütz- und Schubleiste in verschiedenen Ebenen angeordnet sein, von denen aus sie vom Umfang her an einer Stückgutlage zur Anlage gebracht werden können.

Es sei an dieser Stelle darauf hingewiesen, dass teilweise nur solche Bezugsziffern in der einzigen Figur dargestellt sind, die für die Beschreibung der Figur sinnvoll bzw. erforderlich sind. Die dargestellte Ausführungsform stellt lediglich ein Beispiel dar, wie der erfindungsgemäße Palettierkopf und das erfindungsgemäße Verfahren ausgestaltet sein können und stellen keine abschließende Begrenzung dar.

Ein in Fig. 1 ganz oder in Teilen dargestellter Palettierkopf 1 weist eine Auflageebene 2 für jeweils eine aufzunehmende und von einem Übernahmeplatz zu einem Zielort zu überführende Stückgutlage auf. Die Auflageebene 2 ist zum Zwecke der Ablage der im Palettierkopf 1 befindlichen Stückgutlage am Zielort unter der Stückgutlage entfernbar. Der Palettierkopf 1 ist zwischen dem Übernahmeplatz und dem Zielort bewegbar.

Für diese Beweglichkeit des Palettierkopfes 1 in seinem sog. Arbeitsraum kann sich bspw. eine hier nicht dargestellte Aufhängung des Palettierkopfes 1 an einer Hubsäule oder an einem beweglichen Arm eines Mehrachsroboters o. dgl. Aufhängung eignen.

Eine Ablagerichtung der Stückgutlage bei ihrer Ablage am Zielort ist vorteilhaft in etwa senkrecht orientiert zu einer Beladerichtung der Stückgutlage am Übernahmeplatz. Besonders bevorzugt erfolgt die Ablage in einer durch einen Pfeil in Fig. 1 angedeuteten Ablagerichtung A normal zur Auflageebene 2 nach unten aus dem Palettierkopf 1 heraus, wohingegen die durch einen Pfeil in Fig. 1 angedeutete Beladerichtung B parallel zur Auflageebene 2 verläuft.

Mit anderen Worten verläuft die Beladerichtung B parallel zur horizontal orientierten Auflageebene, wohingegen die Ablagerichtung A bevorzugt vertikal verläuft.

Die Stückgutlage ist bei ihrer Aufnahme am Übernahmeplatz sowie bei ihrer Ablage am Zielort jeweils in Abstimmung mit einer Positionierbewegung des Palettierkopfs 1 zwischen dem Übernahmeplatz und dem Zielort innerhalb des Palettierkopfs 1 stabilisierbar und positionierbar.

Der Palettierkopf 1 kann hierdurch schneller seine kurz als Transferbewegung bezeichnete Bewegung vom Übernahmeplatz bis zum Zielort aufnehmen, als wenn die Stückgutlage ihre Abgabeposition innerhalb des Palettierkopfs 1 wie beim Stand der Technik bereits mit dem Beladen bei der Übernahme einnimmt. Hierdurch wird die Wartezeit des Palettierkopfs 1 bis zur Aufnahme dessen Transferbewegung verkürzt. Der Palettierkopf 1 startet mit seiner Transferbewegung nachdem sich die Stückgutlage auf der Auflageebene 2 befindet noch bevor die Stückgutlage ihre Abgabeposition einnimmt.

Das Einnehmen der Abgabeposition der Stückgutlage im Palettierkopf 1 wird während der Transferbewegung erhalten.

Besonders bevorzugt erfolgt die Stabilisierung und Positionierung der Stückgutlage im Palettierkopf 1 während deren Überführung vom Übernahmeplatz zum Zielort, kurz während der Transferbewegung, vorteilhaft zu Beginn und/oder am Ende der Transferbewegung.

Eine besonders vorteilhafte Ausgestaltung der Erfindung sieht Positionierung im Palettierkopf 1 während der Transferbewegung vor, wobei die Massenträgheit der Stückgutlage während des Beschleunigens und Abbremsens des Palettierkopfs 1 genutzt wird.

In dem Palettierkopf 1 können mindestens eine motorisch angetriebene Stützleiste 3 sowie mindestens eine motorisch angetriebene Schubleiste 4 angeordnet sein, die jeweils in durch Doppelpfeile V in Fig. 1 angedeutete Verschieberichtungen VST (Stützleiste 3) und VSC (Schubleiste 4) parallel zur Beladerichtung B beweglich sind. Die jeweils im Palettierkopf 1 aufgenommene Stückgutlage befindet sich zwischen der Stützleiste 3 und der Schubleiste 4.

Vorteile ergeben sich unter anderem durch einen Gegenhalt der Stückgutlage während des Überschiebens und während des Bewegens des Palettierkopfs, wodurch bereits hier höhere Geschwindigkeiten möglich sind.

Bei dem zuvor beschriebenen Palettierkopf 1 können die Stützleiste 3 sowie die Schubleiste 4 zur Stabilisierung der Stückgutlage bei ihrer Aufnahme am Übernahmeplatz sowie bei ihrer Ablage am Zielort jeweils in aufeinander abgestimmter Weise sowie in Abstimmung mit einer Positionierbewegung des Palettierkopfs 1 zwischen dem Übernahmeplatz und dem Zielort innerhalb des Palettierkopfs 1 positionierbar sein.

Die Abstimmung mit einer Positionierbewegung des Palettierkopfs 1 kann dabei derart erfolgen, dass die Stützleiste 3 sowie die Schubleiste 4 eine der Trägheitsbewegung der Stückgutlage beim Beschleunigen und/oder Abbremsen des Palettierkopfs 1 entsprechende Stabilisierungs- und Positionierungsbewegung ausführen. Die vorteilhaft koordinierte, beispielsweise gekoppelte Stabilisierungs- und Positionierungsbewegung der Stützleiste 3 sowie der Schubleiste 4 lässt der Stückgutlage bevorzugt gerade so viel Spielraum, dass diese ihre Trägheitsbewegung auszuführen in der Lage ist.

Gemäß einer vorteilhaften Ausgestaltung setzen die Stützleiste 3 sowie die Schubleiste 4 zumindest zum Ende der Positionierbewegung des Palettierkopfs 1 hin Grenzen, innerhalb denen die Abgabeposition der Stückgutlage im Palettierkopf 1 liegt.

Bei dem Palettierkopf 1 können zu beiden Längsseiten der Auflageebene 2 jeweils motorisch angetriebene Zentrierleisten 5 angeordnet sein, die jeweils gegensinnig zueinander in Verschieberichtungen VZ senkrecht zur Beladerichtung B und in etwa parallel zur Auflageebene 2 beweglich sind.

Bei einem solchen Palettierkopf 1 können die Zentrierleisten 5 zur Stabilisierung einer im Palettierkopf 1 aufgenommenen Stückgutlage gegeneinander zustellbar und an gegenüberliegende Längsseiten der Stückgutlage anlegbar sein.

Zusätzliche Vorteile ergeben sich durch eine vierseitige Führung der Stückgutlage beim Überschieben, wodurch das Lagenbild sowohl bei hoher Überschubgeschwindigkeit der Stückgutlage in den Palettierkopf 1, als auch bei hoher Positionierbewegungsbeschleunigung und -geschwindigkeit des Palettierkopfs 1 erhalten bleibt.

Die Positionierung und Stabilisierung kann dabei zumindest quasi antriebslos erfolgen. Zumindest können motorische Antriebe gegebenenfalls im Palettierkopf 1 angeordneter motorisch beweglicher Stütz- 3 und Schubleisten 4 sowie gegebenenfalls vorhandener Zentrierleisten 5 so ausgelegt und/oder so bestromt sein, dass deren Bewegung synchron mit der Positionierung - vulgo dem Verrutschen - der Stückgutlage erfolgt, jedoch ohne die Stückgutlage selbst anzuschieben beziehungsweise anschieben zu müssen. Das Bewegen, sprich Verrutschen der Stückgutlage innerhalb des Palettierkopfs 1, erledigt deren Massenträgheit.

Wichtig ist hervorzuheben, dass in diesem Zusammenhang eine quasi antriebslose Positionierung auch dann vorliegt, wenn beispielsweise motorisch angetriebene oder antreibbare Stütz- 3 und Schubleisten 4 dazu genutzt werden, beispielsweise einen Übergang von Haftreibung zu Gleitreibung unter Vorliegen einer eine Impulsänderung der Stückgutlage bewirkenden Beschleunigung sowohl unter Geschwindigkeitserhöhung, als auch Geschwindigkeitsabnahme herzustellen oder zu unterstützen. Ebenso verhält es sich mit dem Erreichen der Abgabeposition innerhalb des Palettierkopfs 1, wenn beispielsweise motorisch angetriebene oder antreibbare Stütz- 3 und Schubleisten 4 und/oder beispielsweise motorisch angetriebene oder antreibbare Zentrierleisten 5 genutzt werden, um eine im Palettierkopf absichtlich und gezielt aufgrund ihrer Massenträgheit während des Vorherrschens einer Beschleunigung sowohl unter Geschwindigkeitserhöhung, als auch Geschwindigkeitsabnahme relativ zum Palettierkopf 1 in diesem verrutschende Stückgutlage in der Abgabeposition zu stoppen.

Ebenfalls wichtig ist hervorzuheben, dass während des gesamten Vorgangs des vorsätzlichen Verrutschens der Stückgutlage aufgrund deren Massenträgheit im Palettierkopf 1 die beispielsweise motorisch angetriebene oder antreibbare Stütz- 3 und Schubleisten 4 und/oder beispielsweise motorisch angetriebene oder antreibbare Zentrierleisten 5 tatsächlich oder annähernd an jeweils gegenüberliegenden und/oder benachbarten Seiten der Stückgutlage zur Anlage kommen können. Diese Anlage geschieht jedoch vorteilhaft kraftfrei, zumindest im Sinne obiger Definition zur quasi Antriebslosigkeit. Mit anderen Worten verrutscht die Stückgutlage im Palettierkopf 1 während dessen Beschleunigens und Abbremsens, wobei die sich auf gegenüberliegenden Seiten der Stückgutlage befindlichen motorisch angetriebenen oder antreibbaren Stütz- 3 und Schubleisten 4 der verrutschenden Stückgutlage vorausbeziehungsweise hinterhereilen. Beispielsweise eilt die Schubleiste 4 der Stückgutlage während deren Verrutschens hinterher, wohingegen die Stützleiste der Stückgutlage während deren Verrutschens zumindest bis zur Einnahme der Abgabeposition vorauseilt. Hierdurch kann die Stückgutlage im Palettierkopf 1 während deren Überführung vom Übernahmeplatz zum Zielort stabilisiert werden.

Bei dem mit Stütz- 3 und Schubleisten 4 sowie Zentrierleisten 5 ausgestatteten Palettierkopf 1 kann zumindest die Stützleiste 3 in den gegensinnig zueinander beweglichen Zentrierleisten 5 gehalten und geführt sein. Hierzu können die Zentrierleisten 5 mit beispielsweise als Führungsschlitze ausgeführten Schlitzen 6, versehen sein, durch die hindurch die Stützleiste 3 an den Längsseiten 7 des Palettierkopfs 1 beweglich angeordnet sein kann.

Die Schubleiste 4 kann an einem Gestänge 8 angeordnet sein, welches die Schubleiste 4 über die Auflageebene 2 hochgenug anzuheben geeignet ist, um in angehobenem Zustand eine Stückgutlage zwischen sich und der Auflageebene 2 passieren lassen zu können. Das Gestänge 8 kann die Schubleiste 4 während des Überschiebens anheben, damit eine Stückgutlage unter der Schubleiste 4 hindurch von der Gruppierstation auf die Auflageebene 2 in den Palettierkopf 1 übergeschoben werden kann. Alternativ kann das Gestänge 8 die Schubleiste 4 über eine an der Gruppierstation wartende und zu übernehmende Stückgutlage hinweg heben und dahinter absetzen, um die Stückgutlage zum Zwecke des Überschiebens auf die Auflageebene 2 in den Palettierkopf 1 hinein zu holen.

Die Auflageebene 2 kann durch einen beweglichen Boden des Palettierkopfs 1 gebildet sein. Beispielsweise kann der bewegliche Boden einen Walzen- oder Rollenboden mit einer Vielzahl paralleler Walzen oder Rollen umfassen. Diese können beidseitig mit Führungsketten verbunden sein. Durch einen Antrieb der gegenüberliegenden Führungsketten sind die Walzen oder Rollen unter der Stückgutlage entfernbar. Die Rotationsachsen der Walzen oder Rollen verlaufen parallel zur Auflageebene 2 und senkrecht zur Beladerichtung B.

Gemäß einer vorteilhaften Weiterbildung des Palettierkopfs 1 kann die innerhalb des Palettierkopfs 1 angeordnete und zur Ablage einer Stückgutlage entfernbare Auflageebene 2 geteilt sein, insbesondere indem Abschnitte der mehrteilig ausgebildeten Auflageebene 2 jeweils auseinanderbewegbar sind.

Der die Auflageebene 2 bildende Boden kann beispielsweise hälftig zweigeteilt sein, wobei zum Entfernen der Auflageebene 2 die beiden Hälften in entgegengesetzten Richtungen zurückgezogen werden.

Bei einem entsprechend ausgestalteten Palettierkopf 1 kann so die geteilte, insbesondere zweitgeteilte Auflageebene 2 am Zielort unterhalb der Stückgutlage entfernbar sein. Dadurch kann der Palettierkopf 1 die Stückgutlage zur Ablage auf einem Palettenstapel freigeben, indem die beiden Hälften der Auflageebene 2 in einer Richtung parallel zur Beladerichtung B auseinanderbewegt werden.

Beispielsweise ein zuvor beschriebener und/oder in Fig. 1 ganz oder in Teilen dargestellter Palettierkopf 1 kann dafür vorgesehen sein, ein nachfolgend beschriebenes Verfahren zum Palettieren von Stückgutlagen auszuführen.

Bei dem Verfahren zum Palettieren von Stückgutlagen mittels eines Palettierkopfs 1 werden die Stückgutlagen an einem Übernahmeplatz aufgenommen und auf eine Auflageebene 2 des Palettierkopfs 1 übergeschoben.

Die Stückgutlagen werden auf die Auflageebene 2 des Palettierkopfs 1 übergeschoben, um mittels des Palettierkopfs 1 an einem Zielort abgelegt zu werden. Das Ablegen am Zielort erfolgt, indem die Auflageebene 2 unter der im Palettierkopf 1 befindlichen Stückgutlage am Zielort entfernt wird.

Vorteilhaft sieht das Verfahren vor, dass eine Ablagerichtung A der Stückgutlage bei ihrer Ablage am Zielort in etwa senkrecht orientiert ist zu einer Beladerichtung B der Stückgutlage am Übernahmeplatz.

Das Verfahren sieht vor, dass die Stückgutlage beispielsweise mit dem Überschieben beziehungsweise beim Überschieben in einer ersten Position beispielsweise randseitig innerhalb des Palettierkopfs 1 und relativ zu diesem positioniert wird, wonach die Stückgutlage bei der Überführung des Palettierkopfs 1 zum Zielort auf der Auflageebene in Beladerichtung B weiterbewegt wird, bevor die Auflageebene 2 beim Erreichen des Zielortes unterhalb der abzulegenden Stückgutlage entfernt wird.

Das Weiterbewegen der Stückgutlage in Beladerichtung bezieht sich vorteilhaft auf die Bewegungsrichtung B der Stückgutlage im Palettierkopf 1. Das Weiterbewegen erfolgt während des Überführens des Palettierkopfs 1 zum Zielort, beispielsweise zu Beginn und/oder am Ende des Überführens. Besonders bevorzugt erfolgt das Weiterbewegen unter Ausnutzung der Massenträgheit der Stückgutlage während des Beschleunigens und/oder Abbremsens des Palettierkopfs 1 bei der Überführung.

Bei dem Verfahren wird die Stückgutlage vorteilhaft in einer ersten Position innerhalb des Palettierkopfs 1 und relativ zu diesem positioniert, wonach die Stückgutlage bei der Überführung des Palettierkopfs 1 zum Zielort und zumindest zeitweise während einer Abbremsbewegung des Palettierkopfs 1 kurz vor dem Erreichen des Zielortes auf der Auflageebene 2 in Beladerichtung in eine zweite Position innerhalb des Palettierkopfs 1 und relativ zu diesem weiterbewegt wird, wonach die Auflageebene 2 beim Erreichen des Zielortes unterhalb der abzulegenden Stückgutlage entfernt wird.

Verfahrensgemäß kann vorgesehen sein, dass die Auflageebene 2 geteilt, vorteilhaft zweigeteilt ist.

Das Verfahren kann hierbei vorsehen, dass die geteilte Auflageebene 2 am Zielort unterhalb der Stückgutlage entfernt wird und diese zur Ablage auf einem Palettenstapel freigibt, indem Abschnitte der mehrteilig ausgebildeten Auflageebene 2 jeweils auseinanderbewegt werden.

Vorteilhaft sieht das Verfahren vor, dass die geteilte, insbesondere zweitgeteilte Auflageebene 2 am Zielort unterhalb der Stückgutlage entfernt wird und diese zur Ablage auf einem Palettenstapel freigibt, indem die beiden Hälften der Auflageebene 2 in einer Richtung, bevorzugt in zwei entgegengesetzten Richtungen, parallel zur Beladerichtung B auseinanderbewegt werden.

Das Verfahren kann vorsehen, dass eine Stabilisierung der Stückgutlage während deren Positionierung innerhalb des Palettierkopfs 1 vorgenommen wird. Hierzu können im Palettierkopf 1 mindestens eine motorisch angetriebene Stützleiste 3 sowie mindestens eine motorisch angetriebene Schubleiste 4 angeordnet sein, die jeweils in Verschieberichtungen VST, VSC parallel zur Beladerichtung B beweglich sind, wobei sich die jeweils im Palettierkopf 1 aufgenommene Stückgutlage zwischen der Stützleiste 3 und der Schubleiste 4 befindet.

Das Verfahren kann hierbei vorsehen, dass die Stückgutlage bei der Überführung des Palettierkopfs 1 zum Zielort auf der Auflageebene 2 in Beladerichtung B unter abgestimmter Verschiebebewegung der Stützleiste 3 und der Schubleiste 4 in deren Verschieberichtungen VST, VSC weiterbewegt wird.

Verfahrensgemäß kann die Stückgutlage während der Umsetzbewegung des Palettierkopfs 1 zum Zielort mittels der Verschiebebewegungen der Stützleiste 3 sowie der Schubleiste 4 in deren Verschieberichtungen VST, VSC in etwa mittig im Palettierkopf 1 positioniert werden.

Es ist ersichtlich, dass die Erfindung verwirklicht sein kann durch einen auch als Beladeeinheit bezeichneten oder von einer Beladeeinheit umfassten Palettierkopf 1 sowie alternativ oder zusätzlich durch ein Verfahren zum Palettieren von kurz als Lage beziehungsweise Lagen bezeichneten Stückgutlagen mittels eines solchen Palettierkopfs 1.

Vorteilhaft erfolgt das Überschieben der Lage von der Gruppierstation auf die Beladeeinheit, das Positionieren auf die Abgabeposition in der Beladeinheit und das Übersetzen der Lage auf den Beladeplatz mit einem ständigen Gegenhalt. Durch die vierseitige Führung kann die Lage schneller eingeschoben werden und das Positionieren der Lage auf die Abgabeposition in der Beladeeinheit und das übersetzen auf den Beladeplatz gleichzeitig erfolgen. Das Positionieren der Lage auf die Abgabeposition erfolgt synchron mit dem Abbremsen oder Beschleunigen der Übersetzbewegung. Durch die überlagerten Bewegungen beim Übersetzen kann die Massenträgheit der Lage bzw. das Brems- oder Beschleunigungsmoment der Beladeeinheit genutzt werden um die vom Lagenschieber benötigten Drehmomente zu reduzieren.

Vorteile der Erfindung ergeben sich neben einer vollständigen Lösung der der Erfindung zu Grunde liegenden Aufgabe unter Anderem durch einen auch als höhere Lagenleistung bezeichneten höheren Stückgüterdurchsatz, da durch das vorder- und rückseitige Halten der Lage zwischen Schieber und Gegenhalter nach dem Einschieben der Umsetzvorgang früher gestartet werden kann, obwohl die Lage noch nicht endgültig positioniert ist. Schieber und Gegenhalter können hierbei durch die Schubleiste 4 und die Stützleiste 3 gebildet sein oder diese umfassen. Alternativ kann zum Zwecke beziehungsweise während des Überschiebens ein gruppierstationseitiger Schieber vorgesehen sein.

Zusätzliche Vorteile ergeben sich durch im Vergleich zum Stand der Technik niedrigere benötigte Drehmomente beziehungsweise verringerte benötigte Antriebsleistungen am Antrieb des Schiebers zur Positionierung der Lage, da die positiven Effekte der überlagerten Bewegungen, welche die Ausnutzung der Massenträgheit der Stückgutlagen erlauben, genutzt werden können. Hieraus folgt eine erfolgreiche Schonung der Mechanik durch niedrigere Drehmomente bei vorteilhaft erhöhtem Durchsatz.

Wichtig ist hervorzuheben, dass der Palettierkopf 1 einzelne oder eine Kombination der zuvor in Verbindung mit dem Verfahren beschriebene Merkmale aufweisen kann, ebenso wie das Verfahren einzelne oder eine Kombination mehrerer zuvor in Verbindung mit dem Palettierkopf 1 beschriebene Merkmale aufweisen und/oder verwirklichen kann.

Ebenso wichtig ist hervorzuheben, dass der Palettierkopf 1 und/oder das Verfahren alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu dem in der Zeichnung dargestellten Ausführungsbeispiel beschriebene Merkmale aufweisen kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Palettierkopf
- 2: Auflageebene
- 3: Stützleiste
- 4: Schubleiste
- 5: Zentrierleiste
- 6: Schlitz
- 7: Längsseite
- 8: Gestänge

- A: Ablagerichtung
- B: Beladerichtung
- VSC: Verschieberichtung Schubleiste
- VST: Verschieberichtung Stützleiste
- VZ: Verschieberichtung Zentrierleiste

## Patentansprüche

1. Palettierkopf (1), der eine Auflageebene (2) für jeweils eine aufzunehmende und von einem Übernahmeplatz zu einem Zielort zu überführende Stückgutlage aufweist, welche Auflageebene (2) zum Zwecke der Ablage der im Palettierkopf (1) befindlichen Stückgutlage am Zielort unter der Stückgutlage entfernbar ist, wobei:
- eine Ablagerichtung (A) der Stückgutlage bei ihrer Ablage am Zielort in etwa senkrecht orientiert ist zu einer Beladerichtung (B) der Stückgutlage am Übernahmeplatz, und
- die Stückgutlage bei ihrer Aufnahme am Übernahmeplatz sowie bei ihrer Ablage am Zielort jeweils in Abstimmung mit einer Positionierbewegung des Palettierkopfes (1) zwischen dem Übernahmeplatz und dem Zielort innerhalb des Palettierkopfes (1) stabilisierbar und positionierbar ist.

2. Palettierkopf nach Anspruch 1, in dem mindestens eine motorisch angetriebene Stützleiste (3) sowie mindestens eine motorisch angetriebene Schubleiste (4) angeordnet sind, die jeweils in Verschieberichtungen (VST; VSC) parallel zur Beladerichtung (B) beweglich sind, wobei sich die jeweils im Palettierkopf (1) aufgenommene Stückgutlage zwischen der Stützleiste (3) und der Schubleiste (4) befindet.

3. Palettierkopf nach Anspruch 2, bei dem die Stützleiste (3) sowie die Schubleiste (4) zur Stabilisierung der Stückgutlage bei ihrer Aufnahme am Übernahmeplatz sowie bei ihrer Ablage am Zielort jeweils in aufeinander abgestimmter Weise sowie in Abstimmung mit einer Positionierbewegung des Palettierkopfes (1) zwischen dem Übernahmeplatz und dem Zielort innerhalb des Palettierkopfes (1) positionierbar sind.

4. Palettierkopf nach einem der Ansprüche 1 bis 3, bei dem zu beiden Längsseiten der Auflageebene (2) jeweils motorisch angetriebene Zentrierleisten (5) angeordnet sind, die jeweils gegensinnig zueinander in Verschieberichtungen (VZ) senkrecht zur Beladerichtung (B) und in etwa parallel zur Auflageebene (2) beweglich sind.

5. Palettierkopf nach Anspruch 4, bei dem die Zentrierleisten zur Stabilisierung einer im Palettierkopf (1) aufgenommenen Stückgutlage gegeneinander zustellbar und an gegenüberliegende Längsseiten der Stückgutlage anlegbar sind.

6. Palettierkopf nach Anspruch 4 oder 5, bei dem zumindest die Stützleiste (3) in den gegensinnig zueinander beweglichen Zentrierleisten (5) gehalten und geführt ist.

7. Palettierkopf nach einem der Ansprüche 1 bis 6, bei dem die innerhalb des Palettierkopfes (1) angeordnete und zur Ablage einer Stückgutlage entfernbare Auflageebene (2) geteilt ist, insbesondere indem Abschnitte der mehrteilig ausgebildeten Auflageebene (2) jeweils auseinanderbewegbar sind.

8. Palettierkopf nach Anspruch 7, bei dem die geteilte, insbesondere zweitgeteilte Auflageebene (2) am Zielort unterhalb der Stückgutlage entfernbar ist und die Stückgutlage zur Ablage auf einem Palettenstapel freigeben kann, indem die beiden Hälften der Auflageebene (2) in einer Richtung parallel zur Beladerichtung (B) auseinanderbewegt werden.

9. Verfahren zum Palettieren von Stückgutlagen mittels eines Palettierkopfes (1), bei dem die Stückgutlagen an einem Übernahmeplatz aufgenommen und auf eine Auflageebene (2) des Palettierkopfes (1) übergeschoben werden, um mittels des Palettierkopfes (1) an einem Zielort abgelegt zu werden, indem die Auflageebene (2) unter der im Palettierkopf (1) befindlichen Stückgutlage am Zielort entfernt wird, wobei:
- eine Ablagerichtung (A) der Stückgutlage bei ihrer Ablage am Zielort in etwa senkrecht orientiert ist zu einer Beladerichtung (B) der Stückgutlage am Übernahmeplatz, und
- die Stückgutlage in einer ersten Position innerhalb des Palettierkopfes (1) und relativ zu diesem positioniert wird, wonach die Stückgutlage bei der Überführung des Palettierkopfes (1) zum Zielort auf der Auflageebene (2) in Beladerichtung (B) weiterbewegt wird, bevor die Auflageebene (2) beim Erreichen des Zielortes unterhalb der abzulegenden Stückgutlage entfernt wird.

10. Verfahren nach Anspruch 9, bei dem die Stückgutlage in einer ersten Position innerhalb des Palettierkopfes (1) und relativ zu diesem positioniert wird, wonach die Stückgutlage bei der Überführung zum Zielort und zumindest zeitweise während einer Abbremsbewegung des Palettierkopfes (1) kurz vor dem Erreichen des Zielortes auf der Auflageebene (2) in Beladerichtung (B) in eine zweite Position innerhalb des Palettierkopfes (1) und relativ zu diesem weiterbewegt wird, wonach die Auflageebene (2) beim Erreichen des Zielortes unterhalb der abzulegenden Stückgutlage entfernt wird.

11. Verfahren nach Anspruch 9 oder 10, bei dem im Palettierkopf (1) mindestens eine motorisch angetriebene Stützleiste (3) sowie mindestens eine motorisch angetriebene Schubleiste (4) angeordnet sind, die jeweils in Verschieberichtungen (VST; VSC) parallel zur Beladerichtung (B) beweglich sind, wobei sich die jeweils im Palettierkopf (1) aufgenommene Stückgutlage zwischen der Stützleiste (3) und der Schubleiste (4) befindet.

12. Verfahren nach einem der Ansprüche 9 bis 11, bei dem die Stückgutlage während der Umsetzbewegung des Palettierkopfes (1) zum Zielort mittels der Verschiebebewegungen (VST; VSC) der Stützleiste (3) sowie der Schubleiste (4) in etwa mittig im Palettierkopf (1) positioniert wird.

13. Verfahren nach einem der Anspruche 9 bis 12, bei dem die geteilte Auflageebene (2) am Zielort unterhalb der Stückgutlage entfernt wird und diese zur Ablage auf einem Palettenstapel freigibt, indem Abschnitte der mehrteilig ausgebildeten Auflageebene (2) jeweils auseinanderbewegt werden.

14. Verfahren nach Anspruch 13, bei dem die geteilte, insbesondere zweitgeteilte Auflageebene (2) am Zielort unterhalb der Stückgutlage entfernt wird und diese zur Ablage auf einem Palettenstapel freigibt, indem die beiden Hälften der Auflageebene (2) in einer Richtung parallel zur Beladerichtung (B) auseinanderbewegt werden.
